# EUROPEAN PATENT APPLICATION

(11) **EP 3 696 290 A1**
(43) Date of publication of application: **19.08.2020**
(21) Application number: 18865420.6
(22) Date of filing: 11.10.2018
(51) Int. Cl.: C22C 14/00, B22F 3/10, B22F 3/105, B22F 3/16, B22F 3/24, B22F 9/08, B33Y 70/00, B33Y 80/00, F01D 5/28, F01D 25/00, F02C 7/00, F04D 29/02, F04D 29/38

(54) **TITANIUM-BASED ALLOY MEMBER, METHOD FOR PRODUCING TITANIUM-BASED ALLOY MEMBER, AND PRODUCT IN WHICH TITANIUM-BASED ALLOY MEMBER IS USED**

(30) Priority: 13.10.2017 JP 2017199878
(71) Applicant: Hitachi, Ltd., Tokyo 100-8280 (JP); Tohoku University, Sendai-shi, Miyagi 980-8577 (JP)
(72) Inventor: FUJIEDA Tadashi, Tokyo 100-8280 (JP); KUWABARA Kousuke, Tokyo 100-8280 (JP); OONUMA Atsuhiko, Tokyo 100-8280 (JP); CHIBA Akihiko, Sendai-shi Miyagi 980-8577 (JP); KOIZUMI Yuichiro, Sendai-shi Miyagi 980-8577 (JP); YAMANAKA Kenta, Sendai-shi Miyagi 980-8577 (JP)
(74) Representative: MERH-IP Matias Erny Reichl Hoffmann Patentanwälte PartG mbB
(86) International application number: PCT/JP2018/037924
(87) International publication number: WO 2019/074059

(57) **Abstract**

Provided is a heat-resistant titanium (Ti) alloy member having excellent mechanical characteristics and oxidation resistance at high temperatures and having less mechanical anisotropy, a method for producing such a titanium alloy member, and a product including such an alloy member. A titanium-based alloy member includes titanium (Ti) as a major element and at least 0.5 to 2.0 mass% of boron (B) and has a dispersion of fiber-like TiB particles precipitated in a polycrystal matrix phase, the TiB particles each having a long axis of 1 to 10 µm and a short axis of 0.01 to 0.5 µm or less and having an aspect ratio of 2 to 1000, the TiB particles precipitating in a crystallographically random direction in each of crystal grains of the matrix phase.

## Description

### Technical Field

The present invention relates to titanium-based alloy members that are produced from titanium-based alloy by powder-based additive fabrication, methods for producing such a titanium-based alloy member, and products including such a titanium-based alloy member.

### Background Art

Global demands for commercial aircrafts have been increasing year by year. The current number of the aircrafts is 19,200, and the expected number to be further introduced in the coming 20 years is 17,560. This poses a problem about the increased amount of CO₂ generated due to such an increased number of the aircrafts. To decrease CO₂ emission from aircrafts, one of the effective ways is to develop lightweight aircrafts and improve the engine combustion efficiency. To this end, titanium (Ti) alloys have been increasingly used for airframes and engines of the recently developed aircrafts, because this material has high specific strength and enables a lightweight aircraft as compared with aluminum alloys and steel.

Many commercial aircrafts include a turbofan engine due to its high combustion efficiency and fuel efficiency. A turbofan engine includes four parts of a fan, a compressor, a combustor, and a turbine. The turbofan engine is configured to burn the fuel in the rear of the engine to rotate fan blades in front as well as a gas turbine, and push the air taken by the blades from the front rearward while emitting the combustion gas rearward. The reaction force of this generates the propulsion for the aircraft.

The fan and the compressor located at a relatively low-temperature front region (600°C or less) are mainly made of Ti alloy. The combustor and the turbine located at a high-temperature rear region are mainly made of nickel (Ni) alloy.

The temperature of the compressor increases from the front low-pressure part to the rear high-pressure part, and so the compressor is required to be made of a heat resistant, strong and lightweight material. To this end, the blades of the compressor are mainly made of Ti-6Al-V alloy at the low-pressure part, and α (α+β2 phase) high heat-resistance Ti alloy (e.g., Ti-8Al-1Mo-1V alloy, Ti-6Al-2Sn-4Zr-2Mo alloy) at the high-pressure part.

In the high-pressure part of the compressor, rear blades (heatproof temperature: 600°C) are made of Ni-based superalloy (Inconel 718) having the specific gravity about twice the Ti alloy. To reduce the weight of the engine, light-weight rear blades made of high heat-resistance Ti alloy have been required.

To achieve high heat-resistant Ti alloys, a titanium-based alloy disclosed has a dispersion of disk-shaped titanium boride particles in the titanium-based matrix. At least about 50 volume percent of the titanium boride particles has a maximum dimension of less than about 2 µm. This titanium-based alloy is produced by the method of consolidating nonmetallic precursor compounds to chemically reduce the precursor compounds by vapor-phase reduction without melting the precursor compounds, and then consolidating the obtained metal material.

### Citation List

### Patent Literature

Patent Literature 1: JP 2014-40674 A

### Summary of Invention

### Technical Problem

In this alloy, disk-shaped titanium boride particles are crystal-oriented in a certain direction relative to the crystal orientation of each crystal grain, and this alloy therefore has more than a little mechanical anisotropy. To improve the high-temperature strength, a more effective shape of these titanium boride particles is a rod shape having a large aspect ratio rather than a disk shape. A sufficient effect of improving the strength will be expected from such rod-shaped titanium boride particles even in a small amount. To suppress coarsening of the titanium boride particles, compacting is performed at a low temperature to form an article. This causes the difficulty to obtain a high-density formed article and the difficulty to form a complex-shaped article.

The present invention aims to provide a heat-resistant titanium alloy member having excellent mechanical characteristics and oxidation resistance at high temperatures and having less mechanical anisotropy, a method for producing such a titanium alloy member, and a product including such an alloy member.

### Solution to Problem

(I) One aspect of the present invention provides a titanium-based alloy member that includes fiber-like titanium monoboride (TiB) particles that are effective to improve the high-temperature strength, the titanium-based alloy member having a lot of TiB particles precipitated and dispersed homogeneously without coarsening and agglomeration and precipitated at random in each crystal grain of the matrix phase.
   Specifically the titanium (Ti) -based alloy member includes titanium (Ti) as a major element and at least 0.5 to 2.0 mass% of boron (B), and has a dispersion of fiber-like TiB particles precipitated in a polycrystal matrix phase, the TiB particles each having a long axis of 1 to 10 µm and a short axis of 0.01 to 0.5 µm or less and having an aspect ratio of 2 to 1000, the TiB particles precipitating in a crystallographically random direction in each of crystal grains of the matrix phase.
   In this aspect, the "long axis" of a TiB particle refers to the length of the TiB particle, and the "short axis" refers to the thickness of the TiB particle.
(II) Another aspect of the present invention provides a method for producing the titanium-based alloy member as stated above. The method includes: a raw material mixing and melting step of mixing and melting raw materials of an alloy to form a molten metal that has an alloy composition including titanium as major alloy and 0.5 to 2.0 mass% of boron; an atomizing step of making alloy powder from the molten metal; and an additive fabrication step of making an additive fabricated alloy article of a desired shape from the alloy powder by metal powder-based additive fabrication.
(III) Another aspect of the present invention provides a product including the titanium-based alloy member as stated above, and the product is a rear blade in high-pressure compressor of gas turbine engine for aircraft.

### Advantageous Effects of Invention

The present invention provides a heat-resistant titanium alloy member having excellent mechanical characteristics and oxidation resistance at high temperatures and having less mechanical anisotropy, a method for producing such a titanium alloy member, and a product including such a titanium-based alloy member.

### Brief Description of Drawings

Fig. 1 is a process chart showing one example of a method for producing a titanium-based alloy member according to the present invention.
Fig. 2 is a schematic cross-sectional view showing one example the configuration of an EBM powder-based additive fabrication apparatus and an additive fabrication method.
Fig. 3 schematically shows the configuration of a powder-based additive fabrication apparatus by laser beam melting and an additive fabrication method.
Fig. 4A is an EPMA elemental mapping image of the additive fabricated alloy article of the present invention, showing the TiB dispersion form.
Fig. 4B is an EPMA elemental mapping image of the forged material having the same composition prepared for a comparison with the additive fabricated alloy article, showing the TiB dispersion form.
Fig. 5 shows one example of the TiB dispersion form and shape in an additive fabricated alloy article under the observation with a transmission electron microscope.
Fig. 6 shows a crystal orientation relationship of the matrix phase (M) and TiB (P) in the same crystal grain of additive fabricated alloy articles by EBM at different preheating temperatures, the crystal orientation relationship being found by an electronic diffraction pattern analysis.
Fig. 7 is a photograph showing a rear blade of high-pressure compressor in gas turbine engine for aircraft that is one example of the product including the titanium-based alloy member according to the present invention.

### Description of Embodiments

### (Titanium-based alloy member)

To produce a titanium-based alloy member that includes fiber-like titanium monoboride (TiB) particles that are effective to improve the high-temperature strength, conventional methods have a problem of the difficulty to precipitate and disperse a lot of TiB particles homogeneously without coarsening and agglomeration and to precipitate these TiB particles at random in each crystal grain of the matrix phase.

To develop heat-resistant titanium-based alloy member having excellent mechanical characteristics and oxidation resistance at high temperatures and having less mechanical anisotropy, the present inventors intensively conducted studies on a method for precipitating fine TiB particles at random in each crystal grain of the matrix phase. To this end, the inventors examined a method of forming an additive fabricated alloy article from titanium-based alloy powder by electron beam additive fabrication, and found a possibility of obtaining a titanium-based alloy member having a homogeneous dispersion of fine TiB particles in the matrix as compared with conventional general cast materials.

Preferably the additive amount of boron (B) to the titanium-based alloy is 0.5 to 2.0 mass%. The additive amount of boron (B) less than 0.5 mass% fails to exert an obvious effect of improving the tensile strength at high temperatures. The additive amount of boron (B) exceeding 2.0 mass% leads to abrupt embrittlement.

Specifically the additive fabricated alloy article can have favorable mechanical characteristics at high temperatures (e.g., having the breaking elongation of 5% or more and the tensile strength of 650 MPa or more at 600°C). The upper limits of the breaking elongation and the tensile strength are not limited especially, and currently obtained titanium-based alloy members of the present invention have the upper limits to 20% and 750 MPa, respectively.

The titanium-based alloy of the present embodiment may contain, in addition to boron (B), other elements, such as aluminum (Al), tin (Sn), zirconium (Zr), molybdenum (Mo), and silicon (Si).

Referring to the drawings, the following describes the producing steps of a titanium-based member one by one that is one embodiment of the present invention. The present invention is not limited to the following embodiment, and may be combined or modified as needed without departing from the technical idea of the present invention.

### [Method for producing titanium-based alloy member]

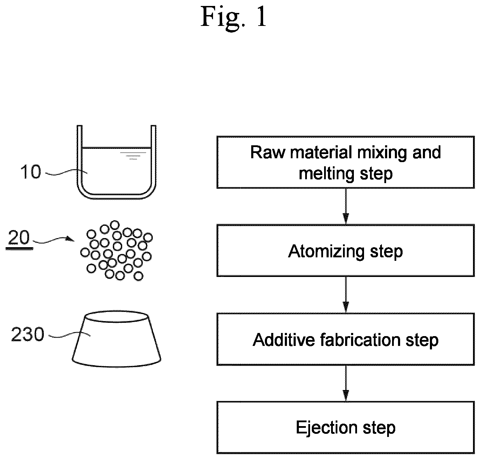

Fig. 1 is a process chart showing one example of a method for producing a titanium-based alloy member according to the present invention. As shown in Fig. 1, the producing method of the present invention includes a raw material mixing and melting step, an atomizing step, an additive fabrication step, and an ejection step. The following describes the present embodiment in details.

### (Raw material mixing and melting step)

As shown in Fig. 1, firstly the raw material mixing and melting step is performed. This step prepares molten metal 10 by mixing and melting raw materials to have desired titanium alloy composition (e.g., Ti-6Al-2Sn-4Zr-2Mo-0.1 Si-1.0B). The method for mixing the raw materials and the method for melting them are not particularly limited, and any conventional method can be used. In one example, vacuum melting is preferably used as the melting method. Preferably the step also performs vacuum carbon deoxidizing, for example, to refine the molten metal 10.

### (Atomizing step)

Next, the atomizing step forms alloy powder 20 from the molten metal 10. The atomizing method is not particularly limited, and any conventional method can be used. In one example, gas atomizing or centrifugal atomizing is preferable, which forms high purity spherical particles with homogenous composition.

From the viewpoints of handling ability and fillability, the average particle diameter of the alloy powder 20 is preferably 30 µm or more and 300 µm or less, and more preferably 40 µm more and 150 µm or less. The alloy powder 20 having the average particle diameter less than 30 µm is easily stirred up at the following additive fabrication step, and this may degrade the shape accuracy of the additive fabricated alloy article. The alloy powder 20 having the average particle diameter exceeding 300 µm may increase the surface roughness of the additive fabricated alloy article at the following additive fabrication step, or may cause insufficient melting of the alloy powder 20.

### (Additive fabrication step)

Next the additive fabrication step is performed. This step makes an additive fabricated alloy article 230 of a desired shape from the alloy powder 20 prepared as stated above by metal powder-based additive fabrication. The metal powder-based additive fabrication forms a near-net-shaped metal member by melting and solidification instead of sintering. This method therefore enables fabrication of a three-dimensional member having hardness equal to or more than a cast material as well as having a complicated shape. The additive fabrication is not particularly limited, and any conventional method can be used. In one example, electron beam melting (EBM) and selective laser melting (SLM) can be preferably used for the metal powder-based additive fabrication.

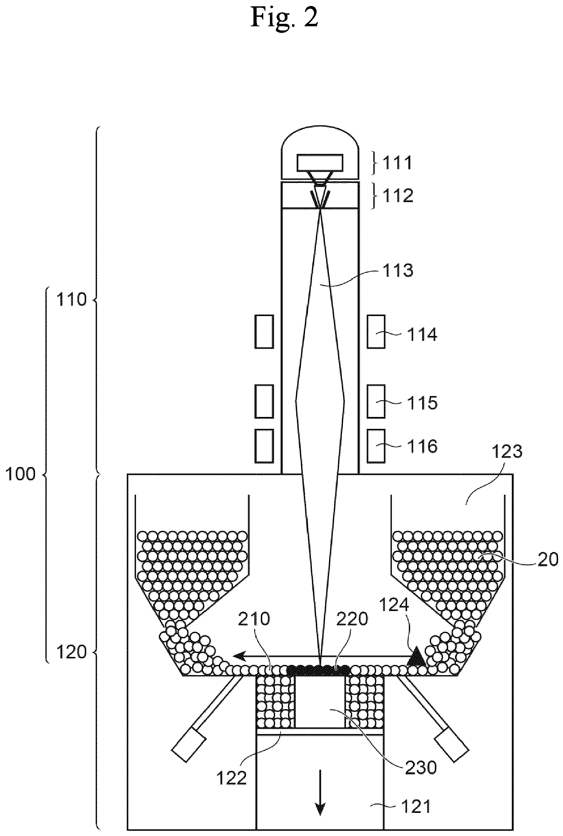

The following describes the additive fabrication step by way of an example by the EBM. Fig. 2 is a schematic cross-sectional view showing one example the configuration of an EBM powder-based additive fabrication apparatus and an additive fabrication method. As shown in Fig. 2, the EBM powder-based additive fabrication apparatus 100 roughly includes an electron beam controller 110 and a powder controller 120, and is configured as a vacuum chamber as a whole.
1) Firstly the step descends a stage 121 by a distance corresponding to a thickness of one layer (e.g., approximately 30 to 800 µm) of the additive fabricated alloy article 230 to be formed. A powder hopper 123 feeds the alloy powder 20 to a baseplate 122 located on the upper face of a stage 121, and a rake arm 124 then flattens the alloy powder 20 to form a powder bed 210 (layered powder).
2) Next a heated tungsten filament 111 (e.g., 2500°C or higher) emits thermal electrons and an anode 112 accelerates the thermal electrons (e.g., to nearly half the speed of light) to form an electron beam 113. An astigmatic correction apparatus 114 shapes the accelerated electron beam 113 into a true circle, and a focus coil 115 then converges the electron beam 113 to the powder bed 210.
3) Next scanning with a relatively weakly (loosely) focused beam by a deflecting coil 116 preheats the entire powder bed 210 to form a preheated member of the powder bed. The EBM preferably performs a step of forming such a preheated member of the powder bed before the powder bed is locally melted and solidified. This prevents stirring-up of the powder bed due to electrification of the alloy powder when the powder bed is irradiated with a focused electron beam for local melting. Heating in this step has another advantageous effect of reducing residual stress in the additive fabricated alloy article and suppressing deformation of the additive fabricated alloy article 230.
   The preheating temperature of the powder bed 210 is preferably 700°C or higher and 1000°C or lower. The preheating temperature less than 700°C hardly progresses the sintering of the alloy powder particles, and so this causes the difficulty to form a preheated member. The preheating temperature exceeding 1000°C excessively progresses the sintering of the alloy powder particles, and so this causes the difficulty to eject the additive fabricated alloy article 230 (to separate the additive fabricated alloy article 230 and the preheated member). From the viewpoint of material characteristics, a preheating temperature as low as practicable is preferable. A higher preheating temperature promotes the growth of TiB particles and so coarsens the TiB particles. This degrades the mechanical characteristics and oxidation resistance. The preheating temperature therefore is preferably 700°C or higher and 850°C or lower.
4) Next, the preheated member of the powder bed is irradiated with a strong focused electron beam for local melting to form a minute alloy molten pool. The irradiation is conducted based on 2D slice data converted from the 3D-CAD data of the additive fabricated alloy article 230 to be formed. This focused beam is then moved for scanning to shift and sequentially solidify the minute alloy molten pool to form a 2D-slice shaped solidified layer 220.
5) The above 1) to 4) is then repeated to form an additive fabricated alloy article 230 having a desired shape.

The above describes the additive fabrication step by way of the example of the EBM. In this way the EBM preliminarily heats the entire powder bed 210 with a relatively weakly focused beam, and this preheating allows the powder bed, i.e., the raw-material powder to be present within a temperature range to precipitate TiB for sufficient time.

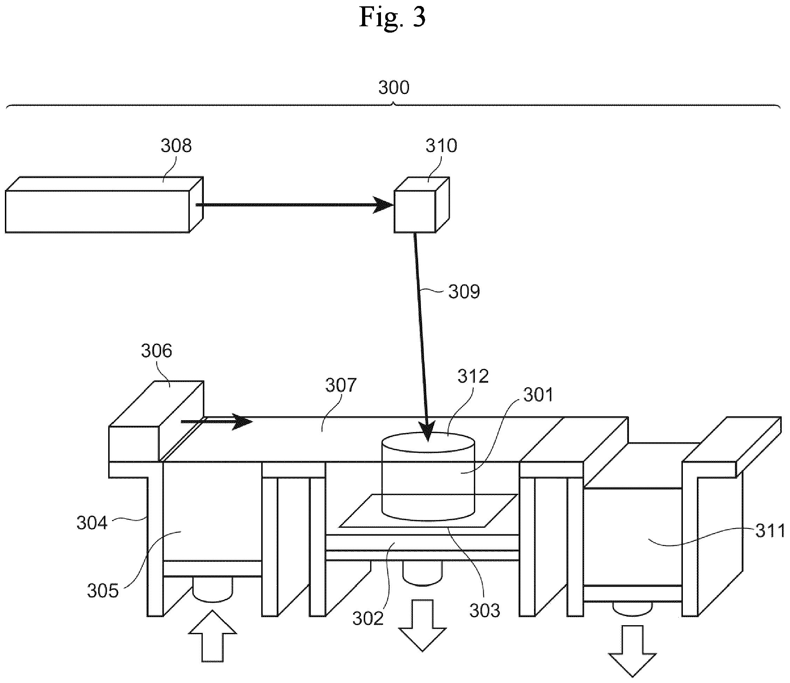

The additive fabrication step by SLM is conducted as follows. Fig. 3 schematically shows the configuration of a powder-based additive fabrication apparatus 300 by SLM.
1) Firstly the step descends a stage 302 by a distance corresponding to a thickness of one layer (e.g., approximately 20 to 50 µm) of the additive fabricated alloy article 301 to be formed. A powder feeding container 304 feeds alloy powder 305 to a baseplate 303 located on the upper face of a stage 302, and a recoater 306 then flattens the alloy powder 305 to form a powder bed 307 (layered powder).
2) Next, not-melting powder on the baseplate 303 is irradiated with laser 309 output from a laser transmitter 308 via a galvanometer mirror 310 to form a minute alloy molten pool. The irradiation is conducted based on 2D slice data converted from the 3D-CAD data of the additive fabricated alloy article 301 to be formed. This minute alloy molten pool is then shifted and solidified sequentially to form a 2D-slice shaped solidified layer 312. The not-melting powder is collected in a collecting container 311. This operation is repeated to stack the layers to fabricate the additive fabricated alloy article 301.
3) After that, aging treatment is conducted to the additive fabricated alloy article 301 to precipitate TiB particles. The SLM heats the powder bed 307, i.e., the raw-material powder with intense laser light for a short time. This technique therefore does not allow the raw-material powder to be present within a temperature range to precipitate TiB for sufficient time. Preferably the method by the SLM therefore conducts the aging treatment after the SLM so as to precipitate TiB sufficiently.

### (Ejection step)

The additive fabricated alloy article 230 fabricated by EBM is embedded in the preheated member. The method therefore requires an ejection step to eject the additive fabricated alloy article 230. The method to eject the additive fabricated alloy article 230 (the method of separating the additive fabricated alloy article 230 and the preheated member, and the method of separating the additive fabricated alloy article 230 and the baseplate 122) is not particularly limited, and any conventional method can be used. In one example, sandblasting using the alloy powder 20 is preferably used. Advantageously the sandblasting using the alloy powder 20 grinds the removed preheated member together with the blasted alloy powder 20, and so enables reuse of the ground preheated member as alloy powder 20.

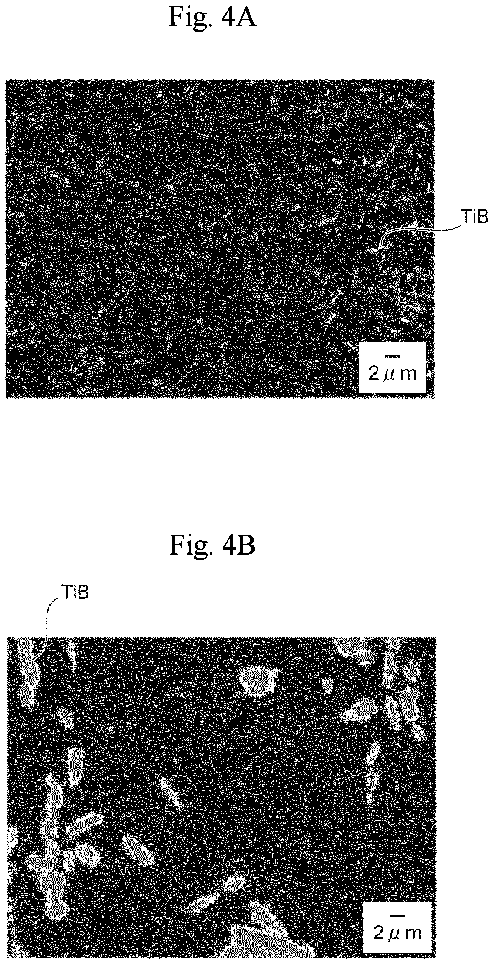

A sample for microstructure observation was taken from the obtained additive fabricated alloy article, and the microstructure of the sample was observed by EPMA. Fig. 4A is an EPMA elemental mapping image of the additive fabricated alloy article of the present invention, and Fig. 4B is an EPMA elemental mapping image of the forged material having the same composition prepared for comparison. These images clearly show that finer and more homogeneous TiB is dispersed and precipitated in the additive fabricated alloy article.

For detailed examinations of the microstructure of the additive fabricated alloy article, the microstructure was observed under a transmission electron microscope (TEM).

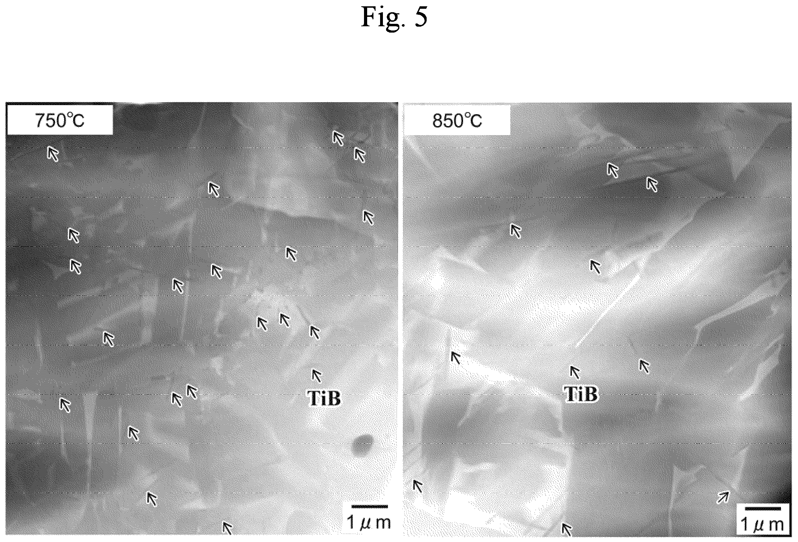

Fig. 5 shows TEM images of the additive fabricated alloy articles subjected to different preheating temperatures. Rod-like parts with difference contrast are TiB particles. Among these parts, at least 50% or more has the long axis of 1 to 10 µm, the short axis of 0.01 to 0.5 µm or less, and the aspect ratio of 2 to 1000.

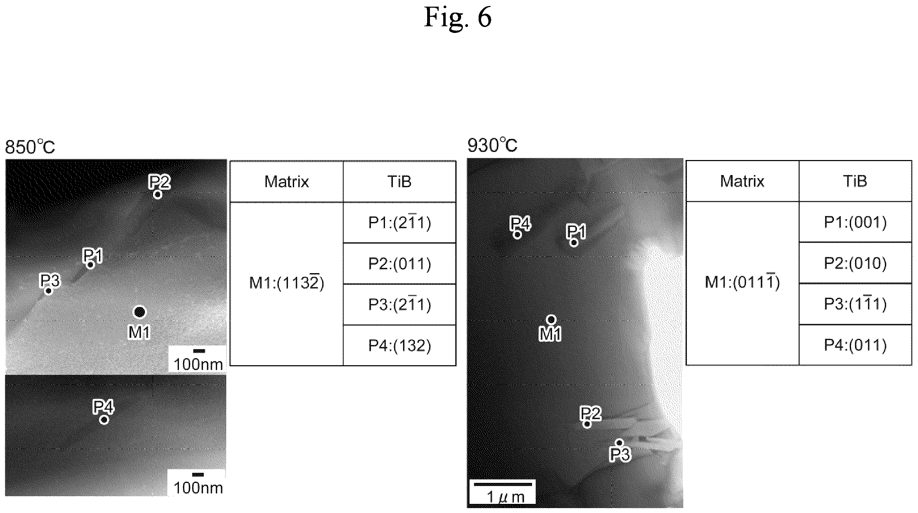

For the additive fabricated alloy articles formed by EBM at different preheating temperatures, Fig. 6 shows the investigation results of the crystal orientation relationship of the matrix phase (M) and TiB (P) in the same crystal grain. The investigation is made based on the electronic diffraction pattern analysis of the matrix phase (M) and TiB (P). These results show that the TiBs in the same crystal grain have different crystal orientations, meaning that the TiBs are precipitated at random in each crystal grain of the matrix phase.

### [Product including titanium-based alloy member]

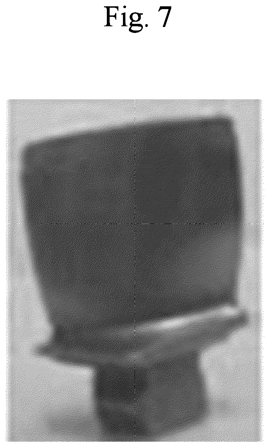

Fig. 7 is a photograph showing a rear blade of the high-pressure compressor in gas turbine engine for aircraft that is one example of the product including the titanium-based alloy member according to the present invention. The titanium-based alloy product of the present invention is produced by metal powder-based additive fabrication, and this method enables easy forming of an object having a complicated shape as shown in Fig. 7. The blade including the titanium-based alloy member of the present invention has both of excellent mechanical characteristics and oxidation resistance at high temperatures.

### [Examples]

The following describes the present invention in more details by way of Examples and Comparative Examples. The present invention is not limited to these examples.

### [Experiment 1]

### (Preparation of raw-material powder P1 to P7)

Electrode rods (Φ50×L500) having the nominal composition shown in Table 1 were prepared with a high-frequency melting furnace. Ti alloy powder was produced from these electrode rods by induction melting gas atomizing process (IAP). The powder was then classified so that the particle diameter fitted in 45 to 105 µm to prepare raw-material powder P1 to P7.

### [Table 1]

**Table 1 Nominal composition of raw-material powder P1 to P6 (units: mass%)**

| Raw-material powder | Ti | Al | Sn | Zr | Mo | Si | B | Nb |
|---|---|---|---|---|---|---|---|---|
| P1 | Bal. | 6.0 | 2.0 | 4.0 | 2.0 | 0.1 | - | - |
| P2 | Bal. | 6.0 | 2.0 | 4.0 | 2.0 | 0.1 | 0.1 | - |
| P3 | Bal. | 6.0 | 2.0 | 4.0 | 2.0 | 0.1 | 0.5 | - |
| P4 | Bal. | 6.0 | 2.0 | 4.0 | 2.0 | 0.1 | 1.0 | - |
| P5 | Bal. | 6.0 | 2.0 | 4.0 | 2.0 | 0.1 | 2.0 | - |
| P6 | Bal. | 6.0 | 2.0 | 4.0 | 2.0 | 0.1 | 2.5 | - |
| P7 | Bal. | 6.0 | 2.0 | 4.0 | 2.0 | 0.1 | 0.5 | 1.0 |

### [Experiment 2]

### (Preparation of EBM alloy article)

Additive fabricated alloy articles were formed from the raw-material powder P1 to P7 prepared at Experiment 1 by electron beam melting (EBM) powder-based additive fabrication apparatus as shown in Fig. 2. The additive fabricated alloy articles were prismatic columnar articles of 25 mm × 25mm × 70mm in height, and the stacking direction was the height direction. The preheating temperature in the EBM was set at 700°C to 900°C.

After the additive fabrication step, the ejection step was conducted to remove the preheated member around the additive fabricated alloy article by sandblasting of powder having the same component as that of the additive fabricated alloy article and so eject the additive fabricated alloy articles M1E-preheating temperature to M7E-preheating temperature.

### [Experiment 3]

### (Preparation of SLM alloy article)

Additive fabricated alloy articles were formed from the raw-material powder P1 to P7 prepared at Experiment 1 by selective laser melting (SLM) powder-based additive fabrication apparatus as shown in Fig. 3. The additive fabricated alloy articles were prismatic columnar articles of 25 mm × 25mm × 70mm in height, and the stacking direction was the height direction. The conditions of aging treatment were heat holding temperature: 750°C, heat holding time: 3 hours, heating atmosphere: vacuum, and cooling method after heat holding: gas cooling. The SLM alloy articles subjected to the aging treatment were referred to as M1S to M7S.

### (Preparation of general forged materials)

Ingots of the Ti alloy powder P1 to P7 prepared at Experiment 1 were made by arc melting with a water-cooled copper mold. The prepared ingots were prismatic columnar articles having the width 14 mm × the length 80 mm × the height 20 mm. To minimize elemental segregation and unevenness of the structure during the casting, melting was repeatedly conducted more than five times. After that, the resultant was kept heating for 15 minutes at α+β phase zone (920 to 950°C) in the air, and then was hot-forged repeatedly twice by press working under the conditions of the rolling reduction: 30% and the rolling rate: 30 mm/s. Cooling after the hot forging was air cooling. The general forged materials M1F to M7F were prepared by the above step. These general forged materials are samples not subjected to the additive fabrication step, and are reference samples to verify the influences from the metal powder-based additive fabrication.

### [Experiment 4]

### (Measurement of mechanical characteristics and oxidation resistance)

A test piece for tensile test was taken from each of the samples prepared as stated above. The test piece had a parallel portion diameter of 4 mm and a parallel portion length of 20 mm. These test samples were taken from the EBM and SLM alloy articles so that the longitudinal direction of the test samples was the same as the additive-fabricated direction.

High-temperature tensile test at 600°C was conducted for each test piece with a universal tester in accordance with JIS G 0567 and at a rate of strain of 5×10⁻⁵ s⁻¹ to measure their tensile strength and breaking elongation. Among five measurements of the tensile test, three measurements other than the maximum value and the minimum value were averaged for the measurement result of the tensile test. For evaluation of the tensile strength, values of 650 MPa or more were judged as "pass" and values less than 650 MPa were judged as "fail". For evaluation of the breaking elongation, values of 5% or more were judged as "pass" and values less than 5% were judged as "fail". Tables 2 and 3 show the results.

A test piece for oxidation resistance test was taken from each of the samples prepared as stated above. The test piece had the dimensions of 15 mm in length × 15 mm in width × 2 mm in thickness. The test piece was put into an alumina crucible and was kept heating at the electric furnace heated at 800°C. After being kept heating for 48 hours, the weight of the test piece placed in the alumina crucible was measured. The oxidation resistance was evaluated based on the increased weight due to oxidation, and was calculated by dividing the weight difference between before and after the oxidation by the surface area of the test piece as in weight increase=(weight after oxidation - weight before oxidation)/surface area of test piece. For evaluation of the oxidation resistance, values of weight increase less than 3.5 mg/cm² were judged as "pass" and values of weight increase of 3.5 mg/cm² or more were judged as "fail". Tables 2 and 3 show the results.

### [Table 2]

**Table 2 Evaluation results on mechanical characteristics and oxidation resistance at high temperatures**

| Sample No. | Preheating temp. (°C) | High-temp. tensile characteristics (600°C) | | | | Oxidation resistance (800°C, 48h) | |
|---|---|---|---|---|---|---|---|
| | | Tensile strength (MPa) | Judgement | Breaking elongation (%) | Judgement | Weight increase (mg/cm²) | Judgement |
| M1E-700 | 700 | 580 | Fail | 25 | Pass | 5.0 | Fail |
| M1E-750 | 750 | 600 | Fail | 22 | Pass | 4.9 | Fail |
| M1E-850 | 850 | 590 | Fail | 18 | Pass | 5.5 | Fail |
| M1E-900 | 900 | 550 | Fail | 15 | Pass | 5.8 | Fail |
| M2E-700 | 700 | 620 | Fail | 23 | Pass | 3.0 | Pass |
| M2E-750 | 750 | 635 | Fail | 20 | Pass | 2.9 | Pass |
| M2E-850 | 850 | 610 | Fail | 15 | Pass | 3.2 | Pass |
| M2E-900 | 900 | 580 | Fail | 11 | Pass | 3.5 | Fail |
| M3E-700 | 700 | 670 | Pass | 19 | Pass | 3.2 | Pass |
| M3E-750 | 750 | 700 | Pass | 18 | Pass | 2,9 | Pass |
| M3E-850 | 850 | 665 | Pass | 15 | Pass | 3.2 | Pass |
| M3E-900 | 900 | 640 | Fail | 10 | Pass | 3.4 | Pass |
| M4E-700 | 700 | 680 | Pass | 14 | Pass | 2.5 | Pass |
| M4E-750 | 750 | 720 | Pass | 12 | Pass | 2.8 | Pass |
| M4E-850 | 850 | 680 | Pass | 10 | Pass | 3.0 | Pass |
| M4E-900 | 900 | 640 | Fail | 5 | Pass | 3.3 | Pass |
| M5E-700 | 700 | 670 | Pass | 10 | Pass | 2.8 | Pass |
| M5E-750 | 750 | 680 | Pass | 8 | Pass | 3.0 | Pass |
| M5E-850 | 850 | 665 | Pass | 6 | Pass | 3.2 | Pass |
| M5E-900 | 900 | 645 | Fail | 4 | Fail | 3.4 | Pass |
| M6E-700 | 700 | 600 | Fail | 6 | Pass | 3.1 | Pass |
| M6E-750 | 750 | 630 | Fail | 4 | Fail | 3.2 | Pass |
| M6E-850 | 850 | 610 | Fail | 2 | Fail | 3.3 | Pass |
| M6E-900 | 900 | 580 | Fail | 1 | Fail | 3.4 | Pass |
| M7E-700 | 700 | 670 | Pass | 18 | Pass | 0.8 | Pass |
| M7E-750 | 750 | 680 | Pass | 16 | Pass | 1.0 | Pass |
| M7E-850 | 850 | 665 | Pass | 14 | Pass | 1.2 | Pass |
| M7E-900 | 900 | 640 | Fail | 11 | Pass | 1.5 | Pass |

### [Table 3]

**Table 3 Evaluation results on mechanical characteristics and oxidation resistance at high temperatures**

| Sample No. | Preheating temp. (°C) | High-temp. tensile characteristics (600°C) | | | | Oxidation resistance (800°C, 48h) | |
|---|---|---|---|---|---|---|---|
| | | Tensile strength (MPa) | Judgement | Breaking elongation (%) | Judgement | Weight increase (mg/cm²) | Judgement |
| M1S | - | 605 | Fail | 23 | Pass | 4.8 | Fail |
| M2S | - | 630 | Fail | 20 | Pass | 3.0 | Pass |
| M3S | - | 710 | Pass | 17 | Pass | 2.7 | Pass |
| M4S | - | 725 | Pass | 12 | Pass | 2.5 | Pass |
| M5S | - | 690 | Pass | 7 | Pass | 3.1 | Pass |
| M6S | - | 625 | Fail | 3 | Fail | 3.2 | Pass |
| M7S | - | 690 | Pass | 17 | Pass | 1.1 | Pass |
| M1F | - | 500 | Fail | 21 | Pass | 5.5 | Fail |
| M2F | - | 505 | Fail | 22 | Pass | 4.3 | Fail |
| M3F | - | 520 | Fail | 14 | Pass | 5.0 | Fail |
| M4F | - | 525 | Fail | 11 | Pass | 4.6 | Fail |
| M5F | - | 540 | Fail | 5 | Pass | 4.8 | Fail |
| M6F | - | 520 | Fail | 2 | Fail | 4.6 | Fail |
| M7F | - | 525 | Fail | 15 | Pass | 1.8 | Pass |

As shown in Table 3, the general forged materials M1F to M7F as the samples not subjected to the additive fabrication step had tensile strength at 600°C less than 650 MPa irrespective of their alloy composition and so were judged as fail for the high-temperature mechanical characteristics.

As shown in Table 2, the test pieces of the EBM additive fabricated articles, which had the B additive amount of 0.5 to 2.0 mass% and were subjected to preheating at temperatures of 700°C to 850°C, had the tensile strength of 650 MPa or more and the breaking elongation of 5% or more, and showed good high-temperature strength. The preheating temperature less than 700°C failed to form a sufficient preheated member, and so failed in additive fabrication.

The SLM additive fabricated articles subjected to aging treatment, which had the B additive amount of 0.5 to 2.0 mass%, had the tensile strength of 650 MPa or more and the breaking elongation of 5% or more, similarly to the EBM additive fabricated articles, and showed good high-temperature strength.

The general forged materials M1F to M6F as the samples not subjected to the additive fabrication step were judged as fail for oxidation resistance because the weight increase was 3.5 mg/cm² or more irrespective of their alloy composition. The general forged material M7F with Nb added had the weight increase less than 3.5 mg/cm² and was good for oxidation resistance due to the added Nb.

The EBM additive fabricated articles and the SLM additive fabricated articles subjected to aging treatment, to which B was added, generally had the weight increase less than 3.5 mg/cm², and showed good oxidation resistance. The experiment further showed that addition of Nb improved their oxidation resistance more.

### [Experiment 5]

### [Product including titanium-based alloy member]

Fig. 7 is a photograph showing a rear blade of the high-pressure compressor in gas turbine engine for aircraft that is one example of the product including the titanium-based alloy member according to the present invention. For the obtained blade, inner defect inspection by X-ray CT scan was conducted, and the dimensions were measured. The result shows that no inner defects that adversely affected mechanical characteristics were found, and no deformation beyond the designed dimensions also was found. This experiment verifies the effectiveness of the present invention.

The titanium-based alloy product of the present invention is produced by metal powder-based additive fabrication, and this method enables easy forming of an object having a complicated shape as well. The blade including the titanium-based alloy member of the present invention has both of excellent mechanical characteristics and oxidation resistance at high temperatures.

The above-described embodiments and examples are to help understanding on the present invention, and the present invention is not limited to the specific configuration described above. A part of one embodiment may be replaced with the configuration of another embodiment, or the configuration of one embodiment may be added to the configuration of another embodiment. A part of the configuration of each embodiment and example in the present invention may be omitted, replaced with another configuration, and include another configuration added.

### Reference Signs List

- 10: Molten metal
- 20: Alloy powder
- 100: EBM powder-based additive fabrication apparatus
- 110: Electron beam controller
- 120: Powder controller
- 111: Tungsten filament
- 112: Anode
- 113: Electron beam
- 114: Astigmatic correction apparatus
- 115: Focus coil
- 116: Deflecting coil
- 121: Stage
- 122: Baseplate
- 123: Powder hopper
- 124: Rake arm
- 210: Powder bed
- 220: Solidified layer
- 230: Additive fabricated alloy article
- 231: Pseudo-solution alloy article
- 300: SLM powder-based additive fabrication apparatus
- 301: Additive fabricated alloy article
- 302: Stage
- 303: Baseplate
- 304: Powder feeding container
- 305: Alloy powder
- 306: Recoater
- 307: Powder bed (layered powder)
- 308: Laser transmitter
- 309: Laser
- 310: Galvanometer mirror
- 311: Collecting container for not-melting powder
- 312: 2D slice shaped solidified layer

## Claims

1. A titanium (Ti) -based alloy member comprising titanium (Ti) as a major element and at least 0.5 to 2.0 mass% of boron (B), and having a dispersion of fiber-like TiB particles precipitated in a polycrystal matrix phase, the TiB particles each having a long axis of 1 to 10 µm and a short axis of 0.01 to 0.5 µm or less and having an aspect ratio of 2 to 1000, the TiB particles precipitating in a crystallographically random direction in each of crystal grains of the matrix phase.

2. The titanium-based alloy member according to claim 1, wherein
the titanium-based alloy member has tensile strength and breaking elongation at 600°C that are 650 MPa or more and 5% or more, respectively.

3. A method for producing a titanium-based alloy member, comprising:
a raw material mixing and melting step of mixing and melting raw materials of an alloy to form a molten metal that has an alloy composition including titanium (Ti) as major alloy and 0.5 to 2.0 mass% of boron (B);
an atomizing step of making alloy powder from the molten metal; and
an additive fabrication step of making an additive fabricated alloy article of a desired shape from the alloy powder by metal powder-based additive fabrication.

4. The method for producing the titanium-based alloy member according to claim 3, wherein
the metal powder-based additive fabrication in the additive fabrication step is performed by electron beam melting.

5. The method for producing the titanium-based alloy member according to claim 4, wherein a preheating temperature in the electron beam melting is 700°C or higher and 850°C or lower.

6. The method for producing the titanium-based alloy member according to claim 3, wherein
the metal powder-based additive fabrication in the additive fabrication step is performed by selective laser melting and aging treatment.

7. A rear blade in high-pressure compressor of gas turbine engine for aircraft, comprising the alloy member according to claim 1 or 2 or an alloy member produced by the method according to any one of claims 3 to 6.
